# EUROPÄISCHE PATENTANMELDUNG

(11) **EP 3 225 093 A1**
(43) Veröffentlichungstag der Anmeldung: **04.10.2017**
(21) Anmeldenummer: 17000465.9
(22) Anmeldetag: 22.03.2017
(51) Int. Cl.: A01C 7/08

(54) **PNEUMATISCHE VERTEILMASCHINE UND ABSPERRORGAN FÜR DIESELBE**

(30) Priorität: 30.03.2016 DE 202016001953 U
(71) Anmelder: RAUCH Landmaschinenfabrik GmbH, 76547 Sinzheim (DE)
(72) Erfinder: Klein, Frédéric, F-67000 Strasbourg (FR); Boos, Florian, 76547 Sinzheim (DE)
(74) Vertreter: Lenz, Steffen

(57) **Zusammenfassung**

Es wird eine pneumatische Verteilmaschine, wie ein Düngerstreuer oder eine Sämaschine, zum Verteilen von pulver-oder partikelförmigen Verteilgütern vorgeschlagen. Die pneumatische Verteilmaschine umfasst eine mit einem Luftstrom beaufschlagbare Förderleitung (6) für das Verteilgut und eine Mehrzahl an Verteilerleitungen (8) zum Überführen des Verteilgutes an mehrere Verteilorgane. Zumindest eine Verteilerleitung ist an einen in einem Gehäuse (18) untergebrachten Verteilgutkanal (20) angeschlossen und mittels einer in dem Gehäuse schwenkbar gelagerten Absperrklappe (22) verschließbar, um den Verteilgutstrom durch diese Verteilerleitung bedarfsweise zu unterbrechen oder zu vermindern. Zwecks eines luftdichten Verschließens des Verteilgutkanals sieht die Erfindung vor, dass die Absperrklappe an einem ihrer Schwenkachse (A) zugewandten Abschnitt (33) eine höhere Steifigkeit aufweist als an ihrem elastisch nachgiebig ausgestalteten Endabschnitt (34), welcher in der Schließstellung der Absperrklappe gegen zumindest einen ihrer Schwenkachse abgewandten Innenquerschnittsbereich des Verteilgutkanals anliegt.

## Beschreibung

Die Erfindung betrifft eine pneumatische Verteilmaschine, insbesondere Düngerstreuer und/oder Sämaschine, zum Verteilen von pulver- oder partikelförmigen Verteilgütern, mit wenigstens einer mit einem Luftstrom beaufschlagbaren Förderleitung für das Verteilgut und mit einer Mehrzahl an Verteilerleitungen zum Überführen des Verteilgutes an eine Mehrzahl an Verteilorganen, wobei zumindest eine Verteilerleitung an einen in einem Gehäuse untergebrachten Verteilgutkanal angeschlossen und mittels einer in dem Gehäuse schwenkbar gelagerten Absperrklappe verschließbar ist, um den Verteilgutstrom durch diese Verteilerleitung bedarfsweise zu unterbrechen und/oder zu vermindern. Die Erfindung bezieht sich ferner auf ein Absperrorgan, welches für eine solche pneumatische Verteilmaschine geeignet ist, mit einem von einem Verteilgutkanal durchsetzten Gehäuse und einer in dem Gehäuse schwenkbar gelagerten Absperrklappe, um den Verteilgutkanal bedarfsweise zu verschließen und/oder zu verengen.

Pneumatische Verteilmaschinen der vorgenannten Art finden insbesondere in der Landwirtschaft zum Ausbringen von Verteilgütern in Form von Saatgut und/oder Dünger verbreitet Verwendung. Dabei wird das Verteilgut üblicherweise in einem Behälter auf Vorrat gehalten und mittels eines in der Regel unterhalb einer Auslauföffnung des Behälters angeordneten Dosierorgans dosiert. Der dosierte Massenstrom an Verteilgut wird sodann beispielsweise an eine dem Dosierorgan nachgeordnete, mittels eines Gebläses mit Druckluft beaufschlagte Förderleitung übergeben, welche den in den Druckluftstrom eindispergierten, dosierten Verteilgutstrom einem Verteilerkopf aufgibt. Der Verteilerkopf umfasst eine Mehrzahl an Abgängen, welche üblicherweise um seinen Umfang verteilt angeordnet sind und an welche sich je eine Verteilerleitung anschließt, welche dazu dient, den Verteilgutstrom in der Anzahl an Verteilerleitungen entsprechenden Teilströmen je einer Verteileinrichtung zuzuführen, welche mit unterschiedlichem Seitenabstand von der Verteilmaschine angeordnet sind. Handelt es sich bei der Verteilmaschine beispielsweise um einen Düngerstreuer, so können die Verteileinrichtungen z.B. von am Ende der Verteilleitungen befindlichen Prallplatten gebildet sein. Handelt es sich hingehen bei der Verteilmaschine beispielsweise um eine Sämaschine, so können die Verteileinrichtungen z.B. Säscharen umfassen, um das Saatgut in den Boden einzubringen. Derartige Verteilmaschinen sind unter anderem aus den DE 44 34 963 A1 oder DE 197 47 029 A1 bekannt.

Die EP 2 462 795 A2 beschreibt eine pneumatische Verteilmaschine der eingangs genannten Art, bei welcher an den Anschlüssen des Verteilerkopfes Gehäuse mit schwenkbaren Absperrklappen festgelegt sind, um den (Teil)verteilgutstrom der sich an die Gehäuse anschließenden, einzelnen Verteilerleitungen wahlweise zu unterbrechen und dabei insbesondere mittels einer sogenannten Teilbreitenschaltung verschiedenen gewünschten Arbeitsbreiten Sorge zu tragen oder es auch zu ermöglichen, innerhalb der gewünschten Arbeitsbreite einzelne Verteilerleitungen zu verschließen, um beispielsweise die auf dem Feld anzulegenden Fahrgassen auszusparen, damit dort nicht unnötig Verteilgut ausgebracht wird. Die Absperrklappen können manuell oder motorisch betätigt sein.

Die WO 2015/028127 A1 beschreibt eine weitere gattungsgemäße Verteilmaschine, welche sich von jener gemäß der oben zitierten EP 2 462 795 A2 dadurch unterscheidet, dass in den an den Verteilerkopf angeschlossenen Gehäusen, in welchen zwecks Gewährleistung einer Teilbreitenschaltung je eine Absperrklappe schwenkbar gelagert ist, zusätzlich Sensoren vorgesehen sind, welche den Verteilgutstrom detektieren. Die Sensoren sorgen hierbei für eine unmittelbare Erkennung etwaiger Verstopfungen der zugehörigen Verteilerleitung oder auch etwaiger Leckagen, wenn die Absperrklappe, insbesondere aufgrund verklemmter Verteilgutpartikel, nicht gänzlich geschlossen worden ist und in unbeabsichtigter Weise einen (geringen) Verteilgutstrom passieren lässt.

Eine ähnliche, insbesondere in Form einer Sämaschine ausgebildete landwirtschaftliche Verteilmaschine ist beispielsweise der EP 2 630 855 A1 zu entnehmen.

In der Praxis hat sich das oben genannte Problem für einen exakten und zuverlässigen Betrieb als hinderlich erwiesen, weil sich einzelne Absperrklappen während des Betriebs, insbesondere während ihres Überführens von ihrer Öffnungsin ihre Schließstellung, verklemmen können und folglich den in dem Gehäuse gebildeten Verteilgutkanal nicht gänzlich verschließen, so dass weiterhin Verteilgutpartikel in die zugehörige Verteilerleitung gelangen können, was es sowohl aus wirtschaftlichen Gründen als auch im Hinblick auf den Umweltschutz zu vermeiden gilt.

Die EP 2 561 743 A1 beschreibt eine weitere pneumatische Verteilmaschine in Form einer Einzelkornsämaschine mit einer rotierbaren Vereinzelungstrommel für das Saatgut und mehreren, hiervon ausgehenden Ausbringleitungen. Die an einer Wandung angeordneten Einmündungsöffnungen der Ausbringleitungen sind mittels je einer gegen deren Stirnseite wirksamen Absperrklappe unabhängig voneinander verschließbar, um für eine Fahrgassenschaltung oder Arbeitsbreiteneinstellung zu sorgen. Um die Ausbringleitungen dabei möglichst luftdicht zu verschließen und insbesondere einer Anhaftung einzelner Saatkörner im Spaltbereich zwischen deren Einmündungsöffnung und der Absperrklappe zu begegnen, sind letztere zumindest teilweise aus einem elastischen Material gefertigt und weisen zwei Abschnitte verschiedener Steifigkeit auf, von welchen ein Teilbereich des die Einmündungsöffnung einer jeweiligen Ausbringleitung abdeckenden Bereiches der Klappe steifer ausgebildet ist als deren übriger Bereich, mit welchem die Absperrklappe angelenkt ist. Indes hat sich gezeigt, dass auch eine solche Ausgestaltung der Absperrklappen sich zum luftdichten Absperren des Innenquerschnittes eines Verteilgutkanals nur bedingt eignet, wobei weiterhin die oben angesprochene Gefahr eines Verklemmens von Verteilgutpartikeln zwischen dem Klappenmaterial und dem Innenquerschnitt des Verteilgutkanals besteht.

Der Erfindung liegt die daher Aufgabe zugrunde, eine gattungsgemäße pneumatische Verteilmaschine sowie ein zum Einsatz in einer solchen geeignetes Absperrorgan der eingangs genannten Art auf einfache und kostengünstige Weise dahingehend weiterzubilden, dass unter zumindest weitestgehender Vermeidung der vorgenannten Nachteile Betriebsstörungen der Absperrklappe vermieden werden und insbesondere ein zuverlässiger und vollständiger Verschluss des mit einem Verteilgutstrom beaufschlagten Verteilgutkanals sichergestellt ist, wenn sich die Absperrklappe in ihrer Schließstellung befindet.

Erfindungsgemäß wird diese Aufgabe bei einer Verteilmaschine sowie bei einem hierfür geeigneten Absperrorgan der eingangs genannten Art dadurch gelöst, dass die Absperrklappe an einem ihrer Schwenkachse zugewandten Abschnitt eine höhere Steifigkeit aufweist als an ihrem elastisch nachgiebig ausgestalteten Endabschnitt, welcher in der Schließstellung der Absperrklappe gegen zumindest einen ihrer Schwenkachse abgewandten Innenquerschnittsbereich des Verteilgutkanals anliegt.

Die erfindungsgemäße Ausgestaltung sorgt aufgrund des elastisch nachgiebig ausgestalteten Endabschnittes der Absperrklappe, welcher in deren Schließstellung dichtend gegen den der Schwenkachse abgewandten Innenquerschnittsbereich des Verteilgutkanals anliegt, für einen sicheren vollständigen Verschluss des in dem Gehäuse ausgebildeten Verteilgutkanals, weil einzelne Partikel des den Verteilgutkanal passierenden Verteilguts, wie z.B. Saatgut und/oder Dünger, welche sich in der Schließstellung der Absperrklappe zwischen dieser und dem Verteilgutkanal verklemmen können, nicht zu Leckagen führen können, da das elastisch nachgiebige Material des Endabschnittes der Absperrklappe solche Partikel umschließt (d.h. die Partikel können bis zu einem gewissen Maß oberflächig in das nachgiebige Material unter elastischer Verformung desselben eindringen), so dass gleichwohl ein gänzlicher Abschluss des Verteilgutkanals mittels der Absperrklappe sichergestellt ist. Aufgrund des der Schwenkachse der Absperrklappe zugewandten Abschnittes mit einer demgegenüber höheren Steifigkeit wird die Formstabilität der Absperrklappe dabei nicht beeinträchtigt, so dass eine dauerhaft sichere Lagerung derselben in dem Gehäuse gewährleistet ist und die Betätigung der Absperrklappe - sei sie manuell oder sei sie motorisch - in herkömmlicher Weise erfolgen kann.

Zu diesem Zweck kann in vorteilhafter Ausgestaltung vorgesehen sein, dass die Absperrklappe an ihrem ihrer Schwenkachse zugewandten Abschnitt gegenüber den während des Betriebs einwirkenden Belastungen, wie den auf sie einwirkenden Kräften infolge Auftreffens des Verteilgutstromes auf die Absperrklappe, Druckdifferenzen aufgrund des Gebläses der pneumatischen Verteilmaschine sowie während des Öffnens und Schließens der Absperrklappe auf diese wirkenden Drehmomenten, im Wesentlichen starr ausgebildet ist. Mit "im Wesentlichen starr" ist dabei gemeint, dass sich die Absperrklappe unter den vorgenannten Betriebsbedingungen nicht nennenswert verformt, um ihre Schwenkfunktion nicht zu beeinträchtigen.

Im Hinblick auf eine konstruktiv einfache und kostengünstige sowie in funktioneller Hinsicht vorteilhafte Ausgestaltung kann vorgesehen sein, dass der elastisch nachgiebig ausgestaltete Endabschnitt der Absperrklappe von einem separaten Teil gebildet ist, welches an dem der Schwenkachse zugewandten Abschnitt der Absperrklappe mit demgegenüber höherer Steifigkeit befestigt ist. Dies gibt die Möglichkeit, einerseits den elastisch nachgiebigen Endabschnitt der Absperrklappe, andererseits den demgegenüber steiferen, ihrer Schwenkachse zugewandten Abschnitt separat aus verschiedenen, jeweils geeigneten Materialien zu fertigen, welche anschließend unter Bildung der Absperrklappe zusammengefügt werden können, so dass der Materialauswahl keinerlei Grenzen gesetzt sind.

Während die Verbindung zwischen dem elastisch nachgiebigen Endabschnitt der Absperrklappe und dem demgegenüber steiferen, ihrer Schwenkachse zugewandten Abschnitt grundsätzlich in beliebiger bekannter Weise ausgestaltet sein kann, so beispielsweise durch Kleben, Schweißen, Schrauben, Nieten, Nähen oder dergleichen, kann in vorteilhafter Ausgestaltung vorgesehen sein, dass der elastisch nachgiebig ausgestaltete Endabschnitt der Absperrklappe in einem sich im Wesentlichen parallel zu deren Schwenkachse erstreckenden Schlitz des der Schwenkachse zugewandten Abschnittes der Absperrklappe mit demgegenüber höherer Steifigkeit festgelegt ist. Eine solche, im Wesentlichen formschlüssige sowie gegebenenfalls auch kraftschlüssige - insoweit hat sich insbesondere auch eine klemmende Verbindung als vorteilhaft erwiesen, wenn die Dicke des elastisch nachgiebigen Endabschnittes der Absperrklappe geringfügig größer gewählt wird als die Breite des Schlitzes - Befestigung der beiden Absperrklappenabschnitte aneinander sorgt für eine dauerhafte und sichere Befestigung derselben aneinander und Sicherstellung einer einwandfreien Übertragung der erforderlichen Öffnungs- und Schließkräfte bzw. -drehmomente. Selbstverständlich ist es dabei auch möglich, den elastisch nachgiebigen Endabschnitt der Absperrklappe zusätzlich mittels weiterer Verbindungsmittel, wie Kleber, Schrauben oder dergleichen, in dem Schlitz des Klappenabschnittes mit demgegenüber höherer Steifigkeit zu montieren.

Um sowohl eine hohe Elastizität des elastisch nachgiebigen Endabschnittes der Absperrklappe als auch eine hohe Formstabilität der Absperrklappe insgesamt und somit eine sehr hohe Betriebssicherheit sicherzustellen, kann es ferner von Vorteil sein, wenn der elastisch nachgiebig ausgestaltete Endabschnitt der Absperrklappe eine in Richtung seines freien Endes zunehmende Elastizität aufweist. Gemäß einer einfachen, aber gleichwohl wirksamen konstruktiven Ausgestaltung hat es sich zu diesem Zweck beispielsweise als vorteilhaft erwiesen, wenn sich der elastisch nachgiebig ausgestaltete Endabschnitt der Absperrklappe in Richtung seines freien Endes hin verjüngt, wobei er insbesondere in Richtung seines freien Endes im Wesentlichen spitz zuläuft. Folglich ergibt sich aufgrund der, insbesondere im Wesentlichen stetigen, Verringerung der Dicke des elastisch nachgiebigen Endabschnittes der Absperrklappe unmittelbar an dessen Außenumfang die höchste Elastizität, so dass hieran verklemmte Verteilgutpartikel das nachgiebige Klappenmaterial problemlos lokal elastisch verformen können, so dass sie von diesem umschlossen werden und dieses gleichwohl dichtend dem Verteilgutkanal anliegt, wenn sich die Absperrklappe in ihrer Schließstellung befindet.

In weiterhin vorteilhafter Ausgestaltung kann in diesem Zusammenhang vorgesehen sein, dass der elastisch nachgiebig ausgestaltete Endabschnitt der Absperrklappe sich nur an seiner einen Seite, insbesondere an seiner in der Schließstellung der Absperrklappe deren Öffnungsstellung zugewandten Seite, verjüngt, während er an seiner anderen Seite, insbesondere an seiner in der Schließstellung der Absperrklappe deren Öffnungsstellung abgewandten Seite, im Wesentlichen eben ausgebildet ist. Auf diese Weise ergibt sich bei der in der Schließstellung befindlichen Absperrklappe eine im Wesentlichen planare und vorzugsweise etwa senkrecht zur Erstreckungsrichtung des mit den auf die Absperrklappe auftreffenden Verteilgutpartikeln beaufschlagten Verteilgutkanals angeordnete Prallfläche der Absperrklappe.

Um für eine erhöhte Formstabilität Absperrklappe in Wirkrichtung der auf sie während des Betriebs einwirkenden Kräfte, wie insbesondere infolge des auf sie in der Schließstellung auftreffenden Druckgasstromes mit den Verteilgutpartikeln sowie die entgegen diesem Druckgasstrom aufzubringenden Schließkräfte, und folglich für eine noch höhere Betriebssicherheit zu sorgen, kann in vorteilhafter Ausführung ferner vorgesehen sein, dass der elastisch nachgiebig ausgestaltete Endabschnitt gegenüber einer Verformung senkrecht zur Schwenkachse der Absperrklappe und von deren Schließstellung in Richtung ihrer Öffnungsstellung eine geringere Elastizität aufweist als gegenüber einer Verformung senkrecht zur Schwenkachse der Absperrklappe und von deren Schließstellung entgegen ihrer Öffnungsstellung.

In konstruktiver Hinsicht kann hierzu beispielsweise eine mechanische Versteifung des elastisch nachgiebigen Endabschnittes der Absperrklappe derart vorgesehen sein, dass der sich im Wesentlichen parallel zur Schwenkachse der Absperrklappe erstreckende Schlitz in dem der Schwenkachse zugewandten - steiferen - Abschnitt der Absperrklappe, in welchem der elastisch nachgiebig ausgestaltete Endabschnitt der Absperrklappe festgelegt ist, zwischen zwei im Wesentlichen parallelen Schenkeln mit unterschiedlicher Länge gebildet ist, wobei der in der Schließstellung der Absperrklappe deren Öffnungsstellung zugewandte Schenkel eine größere Länge besitzt als der in der Schließstellung der Absperrklappe deren Öffnungsstellung abgewandte Schenkel. Der längere Schenkel versteift auf diese Weise den elastisch nachgiebigen Endabschnitt der Absperrklappe über einen längeren Abschnitt als der kürzere Schenkel, so dass sich eine höhere Formstabilität der Absperrklappe ergibt, damit sie den auf die einwirkenden Kräften sicher standzuhalten vermag, während aufgrund des kürzeren Schenkels gleichwohl der elastisch nachgiebige Endabschnitt der Absperrklappe die Hauptprallfläche für die hierauf auftreffenden Verteilgutpartikel darstellt und sich insbesondere im Randbereich des elastisch nachgiebigen Endabschnittes eine sehr hohe Elastizität einstellen lässt.

Um für einen besonders sicheren und dichten Verschluss der Absperrklappe auch im Falle von zwischen dieser und dem Verteilgutkanal verklemmten Verteilgutpartikeln zu sorgen, kann es sich darüber hinaus als vorteilhaft erweisen, wenn die Gesamtlänge der Absperrklappe zumindest geringfügig größer ist als der Abstand zwischen ihrer Schwenkachse und der dieser diametral entgegengesetzten Seite des Verteilgutkanals, so dass das freie Ende des elastisch nachgiebig ausgestalteten Endabschnittes zumindest geringfügig elastisch verformt ist, wenn sich die Absperrklappe in ihrer Schließstellung befindet. Folglich ergibt sich aufgrund dieser zumindest geringfügigen Überlange der Absperrklappe eine mechanische Vorbelastung ihres elastisch nachgiebigen Endabschnittes in der Schließstellung der Absperrklappe, welcher gegen den Innenquerschnitt des Verteilgutkanals angedrückt wird und etwaige, hierzwischen verklemmte Verteilgutpartikel unter elastischer Verformung desselben sicher umschließt. Ferner hat sich eine solche Ausgestaltung insbesondere dann als vorteilhaft erwiesen, wenn die Absperrklappe einen motorischen, insbesondere elektromotorischen, Antrieb aufweist (siehe hierzu auch weiter unten), dessen Lebensdauer dadurch erhöht werden kann, dass die Absperrklappe während des Überführens von ihrer Öffnungsstellung in ihre Schließstellung sanft abgebremst wird, wenn ihr elastisch nachgiebiger Abschnitt kurz vor Erreichen der Schließstellung mit dem Innenquerschnitt des Verteilgutkanals in Kontakt tritt und sich infolge Reibung ein erhöhter Widerstand ergibt. Auf den (Elektro)motor einwirkende Stöße, wenn die Absperrklappe in ihrer Schließstellung gegen den Innenquerschnitt des Verteilgutkanals anstößt, werden folglich gedämpft. Die Gesamtlänge der Absperrklappe kann dabei je nach Art und Elastizität des Materials ihres elastisch nachgiebigen Endabschnittes vorzugsweise um eine Länge zwischen 0,5 mm und 10 mm, insbesondere um eine Länge zwischen 1 mm und 5 mm, größer sein als der Abstand zwischen ihrer Schwenkachse und der dieser diametral entgegengesetzten Seite des Verteilgutkanals.

Gemäß einer vorteilhaften Weiterbildung kann ferner vorgesehen sein, dass die Absperrklappe an ihrem ihrer Schwenkachse zugewandten Abschnitt eine sich im Wesentlichen parallel zur Schwenkachse erstreckende Dichtlippe aufweist, welche in der Schließstellung gegen zumindest einen der Schwenkachse zugewandten Innenquerschnittsbereich des Verteilgutkanals anliegt. Auf diese Weise lassen sich auch kleine Leckagen der Absperrklappe in ihrem ihrer Schwenkachse zugewandten Bereich sicher vermeiden, wobei die an dem mit einer höheren Steifigkeit versehenen und vorzugsweise im Wesentlichen starren Abschnitt der Absperrklappe angeordnete Dichtlippe beispielsweise aus demselben Material gefertigt sein kann wie ihr elastisch nachgiebiger Endabschnitt. Die Dichtlippe, welche zweckmäßigerweise auf der Seite der Absperrklappe angeordnet ist, auf welche die Verteilgutpartikel während des Betriebs auftreffen (also insbesondere auf der in ihrer Schließstellung ihrer Öffnungsstellung abgewandten Seite), kann wiederum auf beliebige bekannte Weise an dem Abschnitt höherer Steifigkeit der Absperrklappe befestigt sein, wie mittels Kleb-, Schraub-, Niet-, Steck-, Rast-, Klemmverbindungen oder dergleichen.

Darüber hinaus besitzt die Absperrklappe zweckmäßigerweise einen an den Innenquerschnitt des Verteilgutkanals angepassten Außenumfang, welcher vorzugsweise im Wesentlichen rechteckig ist, aber selbstverständlich grundsätzlich auch eine beliebige andersartige Form aufweisen kann, z.B. kreisrund, oval, mehreckig etc. In weiterhin vorteilhafter Ausführung kann alternativ oder zusätzliche überdies vorgesehen sein, dass die Absperrklappe im Bereich einer Krümmung des Verteilgutkanals in dem Gehäuse gelagert ist, wobei der Verteilgutkanal insbesondere in die der Schwenkachse der Absperrklappe entgegengesetzte Richtung gekrümmt ist. Eine solche Ausgestaltung bietet sich insbesondere - wenn auch nicht ausschließlich - im Falle von mit einem gewissen Übermaß gegenüber dem Durchmesser des Verteilgutkanals gewählten Abmessungen der Absperrklappe an (siehe oben), so dass der elastisch nachgiebige Endabschnitt der Absperrklappe beim Öffnen bzw. Schließen derselben nicht über einen zu großen Längenabschnitt am Innenquerschnitt des Verteilgutkanals entlanggleiten muss und Gefahr läuft, hierdurch einem erhöhten Verschleiß unterworfen zu sein. Wie weiter unten noch näher erläutert, sind die Gehäuse von gattungsgemäßen Absperrorganen zudem häufig an einem relativ hoch angeordneten Verteilerkopf der pneumatischen Verteilmaschine angeschlossen, so dass ein Anschluss der jeweiligen Verteilerleitung von schräg unten an das Gehäuse erwünscht ist, um die von dem Gehäuse nach schräg unten führende Verteilerleitung nicht ständig auf Biegung zu beanspruchen.

Im Hinblick auf für die Absperrklappe geeignete Materialien mit hoher Verschleißfestigkeit und den notwendigen Werkstoffeigenschaften kann beispielsweise vorgesehen sein, dass
- der elastisch nachgiebig ausgestaltete Endabschnitt der Absperrklappe aus, gegebenenfalls faserverstärkten, Elastomermaterialien, insbesondere aus der Gruppe der Silikone, Kautschuke und Gummi; und/oder
- der der Schwenkachse der Absperrklappe zugewandte Abschnitt mit demgegenüber höherer Steifigkeit aus, gegebenenfalls faserverstärkten, Kunststoffen oder Metallen gefertigt ist bzw. sind.

Wie bereits angedeutet, kann die Absperrklappe grundsätzlich manuell betätigbar sein, wie beispielsweise mittels eines das Gehäuse durchgreifenden Hebels oder dergleichen, oder es kann vorzugsweise ein motorischer Antrieb der Absperrklappe vorgesehen sein, um sie fernbedienbar und/oder mittels einer Steuer- und/oder Regeleinrichtung der Verteilmaschine automatisch in ihre Öffnungs- bzw. Schließstellung oder - sofern gewünscht - auch ein eine teilweise Öffnungsstellung, in welcher der Verteilgutstrom nicht gänzlich unterbrochen, sondern nur verringert wird, zu versetzen. In diesem Zusammenhang kann es sich anbieten, dass das Gehäuse ferner einen, insbesondere elektromotorischen, Antrieb der Absperrklappe und/oder wenigstens einen Sensor zum Erfassen des Verteilgutstromes, wie beispielsweise einen solchen gemäß der eingangs zitierten WO 2015/028127 A1, aufnimmt. Der vorzugsweise elektromotorische Antrieb der Absperrklappe kann beispielsweise eine Kolben-/Zylindereinheit, wie einen Elektrozylinder, oder einen elektromotorischen Drehantrieb, z.B. nach Art eines Gleichstrommotors, bei welchem die Drehbewegung der Abtriebswelle mittels eines Getriebes, Hebels oder dergleichen in eine Schwenkbewegung der Absperrklappe ungesetzt wird, umfassen.

Sofern das Gehäuse, in welchem die Absperrklappe schwenkbar gelagert ist, weitere Komponenten der vorgenannten Art oder auch elektrische bzw. elektronische Bauteile, wie Steuerplatinen, Akkumulatoren, Leiterbahnen etc., aufnimmt, kann gemäß einer vorteilhaften Weiterbildung vorgesehen sein, dass die den Antrieb der Absperrklappe und/oder den Sensor aufnehmende Kammer des Gehäuses mittels eines, insbesondere an der Oberseite des Verteilgutkanals angeordneten, Durchbruches mit dem Verteilgutkanal in Verbindung steht, wobei der Durchbruch zweckmäßigerweise von der in ihrer Öffnungsstellung befindlichen Absperrklappe verschlossen ist. Während der Durchbruch in der Öffnungsstellung der Absperrklappe folglich verschlossen ist, können in der Schließstellung der Absperrklappe etwaige, in die mit dem Antrieb, dem Sensor oder dergleichen bestückte Gehäusekammer gegebenenfalls eingedrungene Verteilgut- oder Staubpartikel in einfacher Weise durch den Durchbruch hindurch in den Verteilgutkanal abfließen, so dass eine Anreicherung derselben in der Gehäusekammer verhindert und insbesondere verunreinigungsbedingte Beeinträchtigungen des Antriebs und/oder Sensors einschließlich hiermit verbundener elektrischer bzw. elektronischer Bauteile vermieden wird.

Schließlich sei an dieser Stelle nochmals darauf hingewiesen, dass es sich bei der pneumatischen Verteilmaschine beispielsweise um eine pneumatische Sämaschine oder um einen Pneumatik-Düngerstreuer handeln kann, wobei das bzw. die Gehäuse der pneumatischen Verteilmaschine, in welchem die Absperrklappe(n) schwenkbar gelagert ist bzw. sind, insbesondere an einem Verteilerkopf der Verteilmaschine mit einer Mehrzahl an Anschlüssen, insbesondere lösbar, festgelegt sein kann bzw. können, so dass das eine Ende des Verteilgutkanals in einen Anschluss des Verteilerkopfes mündet, während an das andere Ende des Verteilgutkanals eine jeweilige Verteilerleitung angeschlossen ist. Indes kann die pneumatische Verteilmaschine selbstverständlich auch nach Art von andersartigen bekannten pneumatischen Verteilmaschinen, wie beispielsweise in Form von pneumatischen Einzelkornsämaschinen, ausgestaltet sein.

Weitere Merkmale und Vorteile der Erfindung ergeben sich aus der nachfolgenden Beschreibung eines Ausführungsbeispiels unter Bezugnahme auf die Zeichnungen. Dabei zeigen:
- Fig. 1: eine schematische Ansicht einer Ausführungsform einer pneumatischen Verteilmaschine von deren Heck aus betrachtet;
- Fig. 2: eine schematische perspektivische Ansicht des Verteilerkopfes der Verteilmaschine gemäß Fig. 1 einschließlich der pneumatischen Förderkomponenten;
- Fig. 3: eine perspektivische Detailansicht des Verteilerkopfes gemäß Fig. 2 mit einer Mehrzahl von an dessen Abgänge angeschlossenen Gehäusen, in welchen je eine Absperrklappe schwenkbar gelagert ist;
- Fig. 4: eine schematische Schnittansicht einer Ausführungsform eines der Gehäuse gemäß Fig. 3 mit der hierin schwenkbar gelagerten Absperrklappe;
- Fig. 5: eine im Wesentlichen der Fig. 4 entsprechende Detailansicht der Absperrklappe in deren Schließstellung;
- Fig. 6: eine im Wesentlichen der Fig. 4 entsprechende Detailansicht der Absperrklappe in deren Öffnungsstellung;
- Fig. 7: eine schematische perspektivische Detailansicht der Absperrklappe in ihrer Schließstellung entsprechend Fig. 5;
- Fig. 8: eine schematische perspektivische Detailansicht der Absperrklappe in ihrer Öffnungsstellung entsprechend Fig. 6;
- Fig. 9: eine im Wesentlichen der Fig. 7 entsprechende schematische perspektivische Detailansicht einer demgegenüber modifizierten Ausführungsform des Gehäuses mit der Absperrklappe in ihrer Schließstellung;
- Fig. 10: eine im Wesentlichen der Fig. 8 entsprechende schematische perspektivische Detailansicht der Ausführungsform des Gehäuses gemäß Fig. 9 mit der Absperrklappe in ihrer Öffnungsstellung;
- Fig. 11: eine schematische perspektivische Ansicht der Absperrklappe gemäß Fig. 4 bis 10;
- Fig. 12: eine schematische perspektivische Ansicht derselben Absperrklappe aus anderem Blickwinkel; und
- Fig. 13: eine schematische Seitenansicht der Absperrklappe gemäß Fig. 11 und 12.

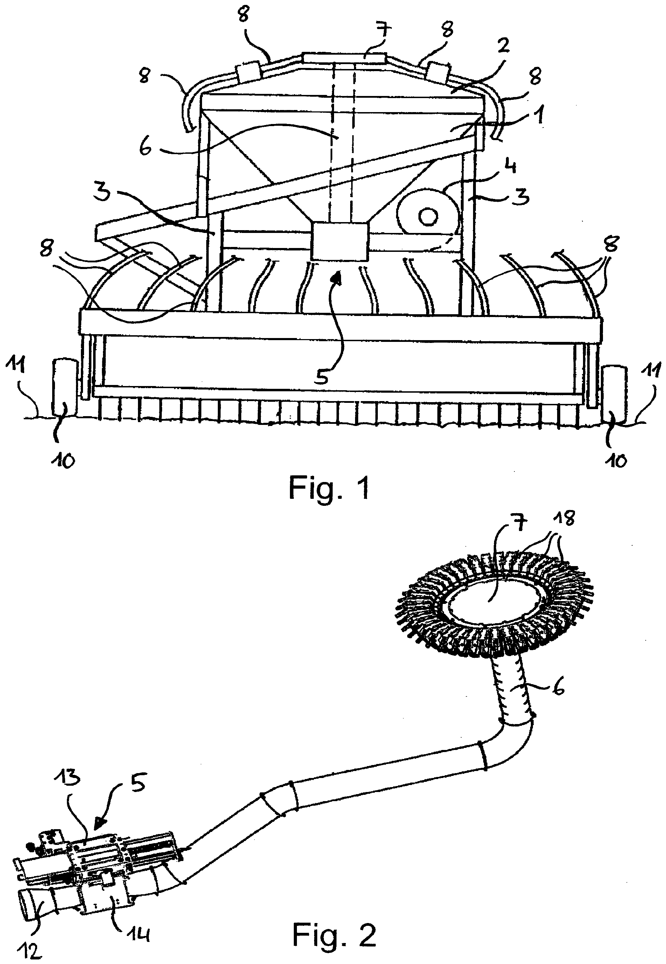

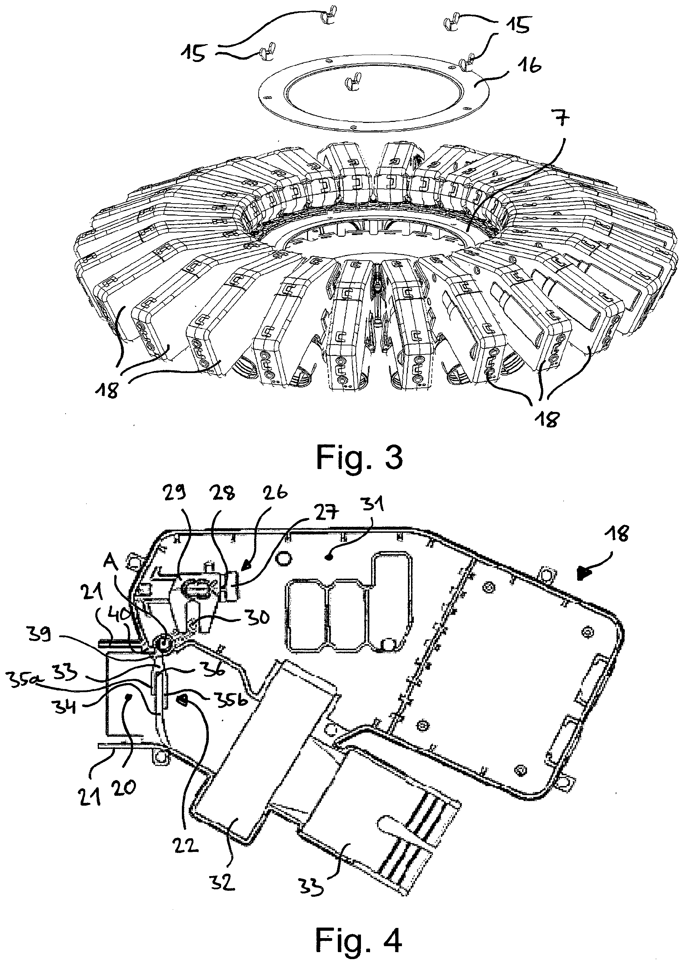

In der Fig. 1 ist ein Ausführungsbeispiel einer pneumatischen Verteilmaschine schematisch wiedergegeben, welche beispielsweise an einem üblichen Dreipunkgestänge eines Traktors lösbar festgelegt werden kann. Sie umfasst einen Behälter 1 zur Aufnahme von Verteilgut, wie z.B. Saatgut und/oder Dünger, mit einer Abdeckung 2, wobei der Behälter 1 an Stützen 3 eines Rahmens getragen sind. An letzterem ist ferner ein Gebläse 4 zur Erzeugung eines Luftstroms festgelegt. Unterhalb eines Auslaufes des etwa trichterförmig nach unten zulaufenden Behälters 1 befindet sich eine in der Fig. 2 näher erkennbare Übergabeeinrichtung 5, welche zur Überführung des Verteilgutes an eine Förderleitung 6 dient, welche von dem Gebläse 4 mit einem Luftstrom beaufschlagt ist, um das Verteilgut nach oben in einen Verteilerkopf 7 zu fördern. Der Verteilerkopf 7 umfasst eine Mehrzahl an um seinen Umfang verteilt angeordneten, sich im vorliegenden Fall etwa radial nach außen erstreckenden Anschlüssen, an welche je ein Gehäuse 18 (vgl. die Fig. 3 ff) angeschlossen ist, welches mit je einer weiter unten noch näher erläuterten, schwenkbar in dem Gehäuse 18 gelagerten Absperrklappe zum bedarfsweisen Unterbrechen des fluidisierten Verteilgutstromes sowie im vorliegenden Ausführungsbeispiel ferner mit je einem Sensor zum Erfassen des Teilstromes an Verteilgut ausgestattet ist. Wie wiederum aus der Fig. 1 ersichtlich, schließt sich an die jeweiligen Gehäuse 18 an deren dem Verteilerkopf 7 abgewandten Seite je eine z.B. nach Art eines Schlauches ausgebildete Verteilerleitung 8 (in Fig. 1 aus Übersichtlichkeitsgründen abgebrochen dargestellt) an, welche im Wesentlichen nach unten und hinten geführt sind und an ihren freien, dem Verteilerkopf 7 abgewandten Enden an Verteilorganen münden. Im Falle der in Fig. 1 exemplarisch gezeigten Drillmaschine handelt es sich bei diesen Verteilorganen um nicht im Einzelnen erkennbare Säscharen mit stromab derselben angeordneten Zustreichern 9, sogenannten Striegeln. Der Rahmen der Verteilmaschine kann im Übrigen über Stützräder 10 auf dem Boden 11 abgestützt uns insbesondere von diesen angehoben werden.

Fig. 2 zeigt die pneumatischen Förderkomponenten der Verteilmaschine gemäß Fig. 1, welche zur Überführung des Verteilgutes von der Übergabeeinrichtung 5 in den Verteilerkopf 7 mittels der Förderleitung 6 dienen. Letztere weist an ihrem dem Verteilerkopf 7 abgewandten Ende einen Anschlussstutzen 12 zur fluidischen Kontaktierung des Gebläses 4 (Fig. 1) auf, wobei stromab des Anschlussstutzens 12 der Auslass eines Dosierorgans 13 über eine mit einem Injektor versehene Übergabekammer 14 in die Förderleitung 6 einmündet. Von dort gelangt das in den Luftstrom eindispergierte Verteilgut zunächst über einen etwa horizontalen Abschnitt der Förderleitung 6 in einen Steigrohrabschnitt derselben, welche von unten in das Zentrum des Verteilerkopfes 7 einmündet, um dessen Umfang herum die radialen Anschlüsse für die Gehäuse 18 angeordnet sind.

In der Fig. 3 ist eine Detailansicht des Verteilerkopfes 7 mit den hieran lösbar festgelegten Gehäusen 18 wiedergegeben. Wie hieraus erkennbar, umfasst der Verteilerkopf 7 an seiner dem Steigrohrabschnitt der Förderleitung (siehe Fig. 2) entgegengesetzten - oberen - Seite einen, beispielsweise mittel Schrauben 15 lösbar an dem Verteilerkopf 7 festgelegten, abnehmbaren Deckel 16, welcher das Innere des Verteilerkopfes 7 einschließlich der Förderleitung 6 und insbesondere der an dessen Anschlüssen festgelegten Gehäuse 18 zugänglich macht.

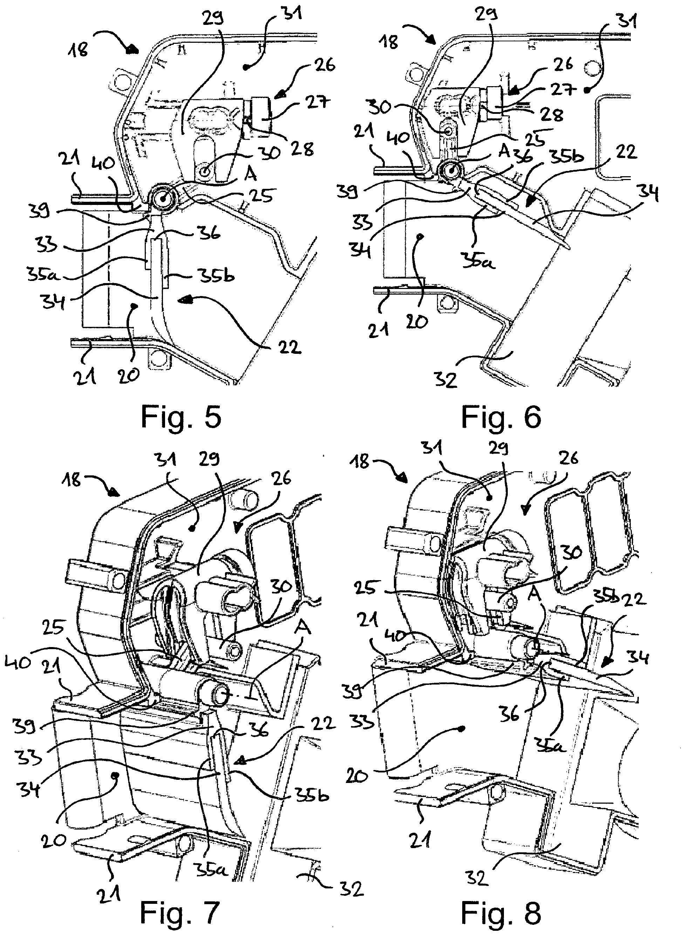

Ein Ausführungsbeispiel eines Absperrorgans der Verteilmaschine mit dem Gehäuse 18 einschließlich der hierin gemeinsam untergebrachten Absperrklappen und Sensoren ist den Fig. 4 bis 8 zu entnehmen. Wie hieraus ersichtlich, weist das Gehäuse 18 einen Verteilgutkanal 20 auf, welcher z.B. an seinem dem Verteilerkopf 7 zugewandten Ende mittels geeigneter Rastverbindungen 21, wie beispielsweise Laschen, an den Anschlüssen des Verteilerkopfes 7 lösbar befestigbar ist. Direkt am eingangsseitigen, dem Verteilerkopf 7 zugewandten Ende des Verteilgutkanals 20 befindet sich eine insgesamt mit dem Bezugszeichen 22 versehene Absperrklappe, welche im vorliegenden Fall um eine im Wesentlichen horizontale und senkrecht zur Erstreckungsrichtung des Verteilgutkanals 20 angeordnete Achse A oberhalb des Verteilgutkanals 20 zwischen einer Schließstellung (Fig. 4, 5 und 7) und wenigstens einer Öffnungsstellung (Fig. 6 und 8) schwenkbar in dem Gehäuse 18 gelagert ist, um den Verteilgutstrom durch den Verteilgutkanal 20 bedarfsweise unterbrechen und gegebenenfalls auch vermindern zu können. Hierzu dient beispielsweise ein elektromotorischer Antrieb 26, welcher an einen drehfest an der Schwenkachse A der Absperrklappe 22 befestigten und sich hiervon etwa radial fort erstreckenden Hebel 25 angreift. Während der elektromotorische Antrieb 26 grundsätzlich in beliebiger geeigneter Weise ausgestaltet sein kann und beispielsweise einen elektrischen Drehantrieb, wie einen Gleichstrommotor oder dergleichen, aufweisen kann, umfasst er bei dem gezeigten Ausführungsbeispiel einen Elektrozylinder 27, an dessen linear hin und her verfahrbaren Kolben 28 ein Mitnehmer 29 festgelegt ist, dessen im Wesentlichen gabelförmige Aufnahme mit einem an dem Hebel 25 der Absperrklappe 22 befestigten Zapfen 30 im Eingriff steht (vgl. insbesondere Fig. 4 bis 6). Der elektromotorische Antrieb 26 einschließlich des Mitnehmers 29 ist in einer von dem Verteilgutkanal 20 getrennten Kammer 31 des Gehäuses 18 aufgenommen.

Der Verteilgutkanal 20 weist an seinem dem Verteilerkopf 7 zugewandten Ende einen etwa rechteckigen Innenquerschnitt auf, innerhalb desselben die Absperrklappe 22, welche einen hieran angepassten, gleichfalls etwa rechteckigen Außenumfang besitzt, schwenkbar gelagert ist und um den Umfang desselben beim vorliegenden Ausführungsbeispiel - stromab der Absperrklappe 22 - ein Sensor 32 angeordnet ist (vgl. insbesondere Fig. 4). Der Sensor 32 dient zur Erfassung des den Verteilgutkanal 20 passierenden Verteilgutstromes und kann beispielsweise als optischer Sensor, wie in Form einer Lichtschranke, ausgebildet sein. Er erstreckt sich im Wesentlichen entlang zumindest einer gesamten Rechteckseite des Innenquerschnittes des Verteilgutkanals 20, so dass der gesamte Querschnitt des Verteilgutkanals 20 sensorisch erfasst werden kann. Im Falle einer Lichtschranke sind folglich einerseits die Lichtsender, andererseits die Lichtempfänger an entgegengesetzten Seiten des Querschnittes des Verteilgutkanals 20 über dessen gesamten Länge angeordnet. Der Sensor 32 ist hierbei in einer Umfangserweiterung des Verteilgutkanals 20 des Gehäuses 18 aufgenommen. Wie der Fig. 4 zu entnehmen ist, geht der rechteckförmige Querschnitt des Verteilgutkanals 20 an seinem der Verteilerleitung 8 (siehe Fig. 1) zugewandten Ende z.B. in einen Auslassabschnitt 33 mit einem etwa runden Querschnitt über, um einen Anschlussstutzen für die üblicherweise von einem nachgiebigen Rundschlauch gebildeten Verteilerleitungen 8 zu bilden. Der runde Auslassabschnitt 33 kann einstückig mit dem Gehäuse 18 gefertigt sein oder als separates Teil an dem Verteilgutkanal 20 festgelegt, z.B. hieran verrastet, sein.

In dem Gehäuse 18 kann ferner, insbesondere in seiner den elektromotorischen Antrieb 26 der Absperrklappe 22 aufnehmenden Kammer 31, eine Steuerplatine (nicht gezeigt) untergebracht sein, welche zur Steuerung des Antriebs 26 der Absperrklappe 22 sowie zur Weitergabe der sensorisch erfassten Daten an eine zentrale elektronische Steuereinheit (nicht gezeigt) der Verteilmaschine dienen kann, um die Absperrklappen 22 bedarfsweise auf einen entsprechenden Eingabebefehl hin und/oder in Abhängigkeit des sensorisch erfassten Verteilgutstromes automatisch einzeln, gemeinsam oder gruppenweise zu betätigen. Die elektronische Steuereinheit kann hierbei insbesondere ferner einerseits eine Anzeigeeinrichtung (ebenfalls nicht gezeigt), welche die Stellung der Absperrklappen 22 und/oder den sensorisch erfassten Verteilgutstrom anzeigt, andererseits eine Eingabeeinrichtung (ebenfalls nicht gezeigt) umfassen, um die entsprechenden Steuerbefehle zum Öffnen bzw. Schließen der Absperrklappen 22 eingeben zu können, um z.B. eine gewünschte Teilbreitenschaltung einzustellen. Die Steuereinrichtung kann ferner z.B. derart programmtechnisch eingerichtet sein, dass sie die Absperrklappe 22 eines jeweiligen Gehäuses 18 automatisch in seine Schließstellung versetzt, wenn der Sensor 30 während des Betriebs bei geöffneter Absperrklappe 22 keinen oder einen zu geringen Verteilgutstrom detektiert, so dass der Verteilgutstrom in das zugehörige Gehäuse 18 im Hinblick auf eine mutmaßlichen Verstopfung dessen Verteilgutkanals 20 oder der diesem nachgeordneten Verteilerleitung 8 (vgl. Fig. 1) verschlossen wird.

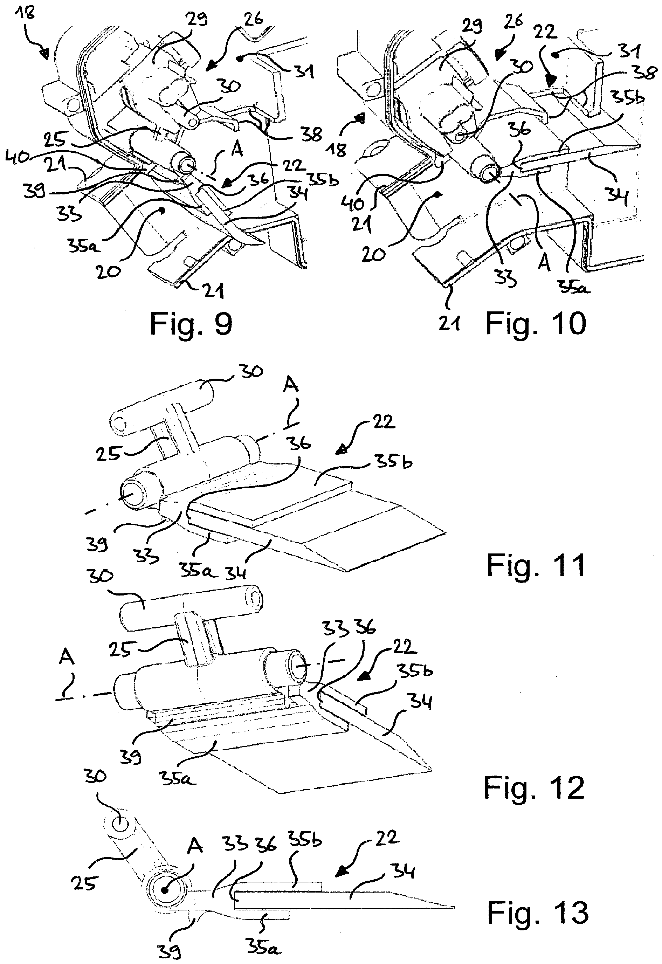

Wie des Weiteren aus den Fig. 4 bis 8 sowie insbesondere auch aus den Detailansichten gemäß Fig. 11 bis 13 hervorgeht, ist die Absperrklappe 22 mehrteilig ausgestaltet und umfasst einerseits einen ihrer Schwenkachse A zugewandten, gegenüber den während des Betriebs einwirkenden Belastungen im Wesentlichen starren Abschnitt 33 mit einer hohen Steifigkeit, welcher beispielsweise aus, gegebenenfalls faserverstärkten, Kunststoffen, z.B. Polyurethanen, Polyamiden, Polyolefinen und dergleichen, oder aus Metall, beispielsweise Aluminium, Stahl und dergleichen, gefertigt sein kann. Andererseits umfasst die Absperrklappe 22 an ihrer der Schwenkachse A abgewandten Seite einen elastisch nachgiebig ausgestalteten Endabschnitt 34 dem demgegenüber geringerer Steifigkeit, welcher beispielsweise aus verschleißfesten dauerelastischen Kunststoffmaterialien gefertigt sein kann, wie beispielsweise aus, gegebenenfalls faserverstärktem, Gummi oder Silikon, und in der Schließstellung der Absperrklappe (vgl. Fig. 4, 5 und 7) gegen den Innenquerschnitt des Verteilgutkanals 20 dichtend anliegt. Aufgrund der Elastizität des nachgiebig elastischen Endabschnittes 34 wird dabei eine sehr hohe Dichtigkeit der Absperrklappe 22 in deren Schließstellung garantiert, weil er sich etwaigen, zwischen dem Endabschnitt 34 und der Wandung des Verteilgutkanals 20 verklemmten Verteilgutpartikeln anschmiegt und diese in das elastische Polymermaterial eindringen können, so dass er gleichwohl dem Innenquerschnitt des Verteilgutkanals 20 allseitig dichtend anliegt. Aufgrund des im Wesentlichen starren bzw. steifen Abschnittes 33 wird gleichwohl eine sehr hohe Betriebssicherheit der Absperrklappe 22 sichergestellt.

Der im Wesentlichen starre Abschnitt 33 und der elastisch nachgiebige Endabschnitt 34 sind beim vorliegenden Ausführungsbeispiel von separaten Teilen gebildet und aneinander befestigt. Dies geschieht beispielsweise dadurch, dass der im Wesentlichen starre bzw. steife Abschnitt 33 der Absperrklappe 22 an seiner dem elastisch nachgiebigen Abschnitt 34 zugewandten Seite nach Art eines U-Profils ausgestaltet ist, in dessen zwischen seinen beiden parallelen Schenkeln 35a, 35b gebildeten und sich etwa parallel zur Schwenkachse A erstreckenden Schlitz 36 der elastisch nachgiebige Abschnitt 34, gegebenenfalls unter Zuhilfenahme eines Klebers, aufgenommen ist. Die beiden Schenkel 35a, 35b des U-Profils des im Wesentlichen starren bzw. steifen Abschnittes 33 der Absperrklappe 22, zwischen welchen der ihren nachgiebig elastischen Abschnitt 34 aufnehmende Schlitz 36 gebildet ist, weisen beim vorliegenden Ausführungsbeispiel eine unterschiedliche Länge auf, wobei sich der in der Schließstellung der Absperrklappe (22) (Fig. 4, 5 und 7) deren Öffnungsstellung zugewandte Schenkel 35b, also der dem Verteilerkopf 7 ab- und der jeweiligen Verteilerleitung 8 zugewandte Schenkel 35b, eine größere Länge besitzt als der in der Schließstellung der Absperrklappe (22) deren Öffnungsstellung abgewandter Schenkel 35a, also der dem Verteilerkopf 7 zu- und der jeweiligen Verteilerleitung 8 abgewandte Schenkel 35a. Der längere Schenkel 35b erstreckt sich dabei beispielsweise über mehr als den halben Durchmesser des Verteilgutkanals 20, während sich der kürzere Schenkel 35a über weniger als den halben Durchmesser des Verteilgutkanals 20 erstreckt, wenn sich die Absperrklappe 22 in ihrer Schließstellung gemäß Fig. 4, 5 und 7 befindet. Auf diese Weise ergibt sich eine nur einseitige mechanische Versteifung des elastisch nachgiebigen Endabschnittes 34 durch den längeren Schenkel 35b des im Wesentlichen starren bzw. steifen Abschnittes 33 der Absperrklappe 22, so dass der elastisch nachgiebige Endabschnitt 34 gegenüber einer elastischen Verformung senkrecht zur Schwenkachse A der Absperrklappe 22 und von deren Schießstellung (Fig. 4, 5 und 7) in Richtung ihrer Öffnungsstellung (Fig. 6 und 8) eine geringere Elastizität aufweist als gegenüber einer Verformung senkrecht zur Schenkachse A und von der Schließstellung (Fig. 4, 5 und 7) der Absperrklappe 22 in Richtung deren Öffnungsstellung. Der Absperrklappe 22 wird folglich eine erhöhte Formstabilität in Richtung der auf sie einwirkenden Öffnungs- und Schließkräfte sowie gegenüber den von dem Verteilerkopf 7 auf sie auftreffenden Verteilgutpartikeln verliehen, ohne die gewünschte Elastizität ihres elastisch nachgiebigen Abschnittes 34 insgesamt zu beeinträchtigen.

Um die Elastizität des nachgiebig elastischen Abschnittes 34 der Absperrklappe 22 in seinem äußeren Umfangsbereich, wo er in der Schließstellung mit dem Innenquerschnitt des Verteilgutkanals 20 dichtend in Kontakt tritt, weiter zu erhöhen, verjüngt sich der nachgiebig elastische Abschnitt 34 bei dem zeichnerisch wiedergegebenen Ausführungsbeispiel in Richtung seines freien Endes hin und läuft dort im Wesentlichen spitz zu. In diesem Zusammenhang ist im vorliegenden Fall vorgesehen, dass der elastisch nachgiebige Endabschnitt 34 der Absperrklappe 22 sich nur an seiner einen Seite, nämlich an seiner in der Schließstellung der Absperrklappe 22 (Fig. 4, 5 und 7) deren Öffnungsstellung (Fig. 6 und 8) zugewandten Seite, welcher der längere Schenkel 35b des U-Profils des im Wesentlichen starren bzw. steifen Abschnittes 33 anliegt, verjüngt, während er an seiner entgegengesetzten Seite, nämlich an seiner in der Schließstellung (Fig. 4, 5 und 7) der Absperrklappe 22 deren Öffnungsstellung (Fig. 6 und 8) abgewandten Seite, welcher der kürzere Schenkel 35a des U-Profils des im Wesentlichen starren bzw. steifen Abschnittes 33 anliegt, im Wesentlichen eben bzw. planar ausgebildet ist, um eine einheitlich Prallfläche für die auftreffenden Verteilgutpartikel zu bilden. Der endständige, sich verjüngende Bereich des elastisch nachgiebigen Endabschnittes 34 kann sich dabei z.B. stetig verjüngen, so dass sich ein Querschnitt des verjüngten Bereiches im Wesentlichen in Form eines spitzwinkligen Dreiecks ergibt.

Wie weiterhin insbesondere in den Fig. 4, 5 und 7 erkennbar ist, in welchen die Absperrklappe 22 geschlossen worden ist, ist beim vorliegenden Ausführungsbeispiel die Gesamtlänge der Absperrklappe 22 um beispielsweise etwa 3 mm größer ist als der Abstand zwischen ihrer Schwenkachse und der dieser diametral entgegengesetzten Seite des Verteilgutkanals 20, so dass das freie Ende des elastisch nachgiebigen Endabschnittes 34 elastisch verformt wird, wenn sich die Absperrklappe 22 in ihrer Schließstellung befindet. Auf diese Weise wird einerseits der elastische Andruck der Absperrklappe 22 in deren Schließstellung gegen den Innenquerschnitt des Verteilgutkanals 20 erhöht, so dass zwischen diesen gegebenenfalls verklemmte Verteilgutpartikel zu keinerlei Leckagen führen, andererseits ergibt sich infolge Reibwiderstandes des elastisch nachgiebigen Abschnittes 34 an der Wandung des Verteilgutkanals 22 während des Schließens der Absperrklappe 22 ein Abbremsen ihrer Schwenkbewegung, so dass die auf deren elektromotorischen Antrieb wirkende Stoßbelastung gedämpft wird. Um gleichwohl für einen verschleißarmen Betrieb zu sorgen, kann die Absperrklappe 22 beispielsweise im Bereich einer Krümmung des Verteilgutkanals 20 in Richtung der der Schwenkachse A der Absperrklappe 22 entgegengesetzte Seite (in Fig. 4 bis 8 nach unten) angeordnet sein.

Bei dem in den Fig. 9 und 10 dargestellten Ausführungsbeispiel sind identische Komponenten mit denselben Bezugszeichen versehen und nicht nochmals erläutert, um Wiederholungen zu vermeiden. Die in den Fig. 9 und 10 gezeigte Ausführungsform unterscheidet sich von jener gemäß den Fig. 4 bis 8 im Grunde nur dadurch, dass die Kammer 31 des Gehäuses, welche den elektromotorischen Antrieb 26 der Absperrklappe 22 sowie den Sensor 32 aufnimmt, mittels eines an der Oberseite des Verteilgutkanals 20, an welcher auch die Absperrklappe 22 selbst schwenkbar gelagert ist, angeordneten Durchbruches 38 mit dem Verteilgutkanal 20 in Verbindung steht. Der Durchbruch 38 ist dabei mit einem axialen Abstand von der Schwenkachse A der Absperrklappe 22 angeordnet, welcher kleiner ist als die Länge der Absperrklappe 22, so dass letztere den Durchbruch 38 verschließt, wenn sie sich in ihrer in der Fig. 10 gezeigten Öffnungsstellung befindet. Der Durchbruch 38 dient zum Abführen von gegebenenfalls in die Gehäusekammer 31 eingedrungenen Feinpartikeln oder Staub in den Verteilgutkanal 20, welche in dessen stromab der Absperrklappe 22 befindlichen Abschnitt abfließen können, wenn sich die Absperrklappe 22 in ihrer in der Fig. 9 gezeigten Schließstellung befindet.

Alternativ oder zusätzlich kann die Absperrklappe 22 sowohl bei dem Ausführungsbeispiel gemäß den Fig. 4 bis 8 als auch bei jenem gemäß den Fig. 9 und 10 an ihrem ihrer Schwenkachse A zugewandten Abschnitt - also an ihrem im Wesentlichen starren bzw. steifen Abschnitt 33 - mit einer sich im Wesentlichen parallel zur Schwenkachse A erstreckenden Dichtlippe 39 versehen sein (vgl. hierzu insbesondere auch die Fig. 11 bis 13), welche in der Schließstellung der Absperrklappe 22 gegen den der Schwenkachse A zugewandten Innenquerschnittsbereich des Verteilgutkanals 20 bzw. gegen einen hieran angeordneten Dichtvorsprung 40 anliegt. Die etwa senkrecht von der Erstreckungsebene der Absperrklappe 22 vorstehende Dichtlippe 22, welche z.B. aus demselben Material wie der elastisch nachgiebige Endabschnitt 34 der Absperrklappe 22 gefertigt sein kann, verhindert insbesondere ein Eindringen von Feinpartikeln einschließlich Staub in die Gehäusekammer 31 mit dem elektromotorischen Antrieb 26 der Absperrklappe 22 und dem Sensor 32.

## Patentansprüche

1. Pneumatische Verteilmaschine, insbesondere Düngerstreuer und/oder Sämaschine, zum Verteilen von pulver- oder partikelförmigen Verteilgütern, mit wenigstens einer mit einem Luftstrom beaufschlagbaren Förderleitung (6) für das Verteilgut und mit einer Mehrzahl an Verteilerleitungen (8) zum Überführen des Verteilgutes an eine Mehrzahl an Verteilorganen, wobei zumindest eine Verteilerleitung (7) an einen in einem Gehäuse (18) untergebrachten Verteilgutkanal (20) angeschlossen und mittels einer in dem Gehäuse (18) schwenkbar gelagerten Absperrklappe (22) verschließbar ist, um den Verteilgutstrom durch diese Verteilerleitung (8) bedarfsweise zu unterbrechen und/oder zu vermindern, **dadurch gekennzeichnet, dass** die Absperrklappe (22) an einem ihrer Schwenkachse (A) zugewandten Abschnitt (33) eine höhere Steifigkeit aufweist als an ihrem elastisch nachgiebig ausgestalteten Endabschnitt (34), welcher in der Schließstellung der Absperrklappe (22) gegen zumindest einen ihrer Schwenkachse (A) abgewandten Innenquerschnittsbereich des Verteilgutkanals (20) anliegt.

2. Pneumatische Verteilmaschine nach Anspruch 1, **dadurch gekennzeichnet, dass** die Absperrklappe (22) an ihrem ihrer Schwenkachse (A) zugewandten Abschnitt (33) gegenüber den während des Betriebs einwirkenden Belastungen im Wesentlichen starr ausgebildet ist.

3. Pneumatische Verteilmaschine nach Anspruch 1 oder 2, **dadurch gekennzeichnet, dass** der elastisch nachgiebig ausgestaltete Endabschnitt (34) der Absperrklappe (22) von einem separaten Teil gebildet ist, welches an dem der Schwenkachse (A) zugewandten Abschnitt (33) der Absperrklappe (34) mit demgegenüber höherer Steifigkeit befestigt ist.

4. Pneumatische Verteilmaschine nach einem der Ansprüche 1 bis 3, **dadurch gekennzeichnet, dass** der elastisch nachgiebig ausgestaltete Endabschnitt (34) der Absperrklappe (22) in einem sich im Wesentlichen parallel zu deren Schwenkachse (A) erstreckenden Schlitz (36) des der Schwenkachse (A) zugewandten Abschnittes (33) der Absperrklappe (22) mit demgegenüber höherer Steifigkeit festgelegt ist.

5. Pneumatische Verteilmaschine nach einem der Ansprüche 1 bis 4, **dadurch gekennzeichnet, dass** der elastisch nachgiebig ausgestaltete Endabschnitt (34) der Absperrklappe (22) eine in Richtung seines freien Endes zunehmende Elastizität aufweist, wobei sich der elastisch nachgiebig ausgestaltete Endabschnitt (34) der Absperrklappe (22) insbesondere in Richtung seines freien Endes verjüngt.

6. Pneumatische Verteilmaschine nach Anspruch 5, **dadurch gekennzeichnet, dass** der elastisch nachgiebig ausgestaltete Endabschnitt (34) der Absperrklappe (22) sich nur an seiner einen Seite, insbesondere an seiner in der Schließstellung der Absperrklappe (22) deren Öffnungsstellung zugewandten Seite, verjüngt, während er an seiner anderen Seite, insbesondere an seiner in der Schließstellung der Absperrklappe (22) deren Öffnungsstellung abgewandten Seite, im Wesentlichen eben ausgebildet ist.

7. Pneumatische Verteilmaschine nach einem der Ansprüche 1 bis 6, **dadurch gekennzeichnet, dass** der elastisch nachgiebig ausgestaltete Endabschnitt (34) gegenüber einer Verformung senkrecht zur Schwenkachse (A) der Absperrklappe (22) und von deren Schließstellung in Richtung ihrer Öffnungsstellung eine geringere Elastizität aufweist als gegenüber einer Verformung senkrecht zur Schwenkachse (A) der Absperrklappe (22) und von deren Schließstellung entgegen ihrer Öffnungsstellung.

8. Pneumatische Verteilmaschine nach einem der Ansprüche 4 bis 7, **dadurch gekennzeichnet, dass** der sich im Wesentlichen parallel zur Schwenkachse (A) der Absperrklappe (22) erstreckende Schlitz (36) in dem der Schwenkachse (A) zugewandten Abschnitt (33) der Absperrklappe (22), in welchem der elastisch nachgiebig ausgestaltete Endabschnitt (34) der Absperrklappe (22) festgelegt ist, zwischen zwei im Wesentlichen parallelen Schenkeln (35a, 35b) mit unterschiedlicher Länge gebildet ist, wobei der in der Schließstellung der Absperrklappe (22) deren Öffnungsstellung zugewandte Schenkel (35b) eine größere Länge besitzt als der in der Schließstellung der Absperrklappe (22) deren Öffnungsstellung abgewandte Schenkel (35a).

9. Pneumatische Verteilmaschine nach einem der Ansprüche 1 bis 8, **dadurch gekennzeichnet, dass** die Gesamtlänge der Absperrklappe (22) zumindest geringfügig größer ist als der Abstand zwischen ihrer Schwenkachse (A) und der dieser diametral entgegengesetzten Seite des Verteilgutkanals (20), so dass das freie Ende des elastisch nachgiebig ausgestalteten Endabschnittes (33) zumindest geringfügig elastisch verformt ist, wenn sich die Absperrklappe (22) in ihrer Schließstellung befindet, wobei die Gesamtlänge der Absperrklappe (22) insbesondere um eine Länge zwischen 0,5 mm und 10 mm größer ist als der Abstand zwischen ihrer Schwenkachse (A) und der dieser diametral entgegengesetzten Seite des Verteilgutkanals (20).

10. Pneumatische Verteilmaschine nach einem der Ansprüche 1 bis 9, **dadurch gekennzeichnet, dass** die Absperrklappe (22) an ihrem ihrer Schwenkachse (A) zugewandten Abschnitt (33) eine sich im Wesentlichen parallel zur Schwenkachse (A) erstreckende Dichtlippe (39) aufweist, welche in der Schließstellung gegen zumindest einen der Schwenkachse (A) zugewandten Innenquerschnittsbereich des Verteilgutkanals (20) anliegt.

11. Pneumatische Verteilmaschine nach einem der Ansprüche 1 bis 10, **dadurch gekennzeichnet, dass** die Absperrklappe (22)
- einen an den Innenquerschnitt des Verteilgutkanals (20) angepassten, insbesondere im Wesentlichen rechteckigen, Außenumfang besitzt; und/oder
- im Bereich einer Krümmung des Verteilgutkanals (20) gelagert ist, wobei der Verteilgutkanal (20) insbesondere in die der Schwenkachse (A) der Absperrklappe (22) entgegengesetzte Richtung gekrümmt ist.

12. Pneumatische Verteilmaschine nach einem der Ansprüche 1 bis 11, **dadurch gekennzeichnet, dass**
- der elastisch nachgiebig ausgestaltete Endabschnitt (34) der Absperrklappe (22) aus, gegebenenfalls faserverstärkten, Elastomermaterialien, insbesondere aus der Gruppe der Silikone, Kautschuke und Gummi; und/oder
- der der Schwenkachse der Absperrklappe (22) zugewandte Abschnitt (33) mit demgegenüber höherer Steifigkeit aus, gegebenenfalls faserverstärkten, Kunststoffen oder Metallen
gefertigt ist bzw. sind.

13. Pneumatische Verteilmaschine nach einem der Ansprüche 1 bis 12, **dadurch gekennzeichnet, dass** das Gehäuse (18) ferner einen, insbesondere elektromotorischen, Antrieb (26) der Absperrklappe (22) und/oder wenigstens einen Sensor (32) zum Erfassen des Verteilgutstromes aufnimmt.

14. Pneumatische Verteilmaschine nach Anspruch 13, **dadurch gekennzeichnet, dass** die den Antrieb (26) der Absperrklappe (22) und/oder den Sensor (30) aufnehmende Kammer (31) des Gehäuses (18) mittels eines, insbesondere an der Oberseite des Verteilgutkanals (20) angeordneten, Durchbruches (38) mit dem Verteilgutkanal (20) in Verbindung steht, wobei der Durchbruch (38) insbesondere von der in ihrer Öffnungsstellung befindlichen Absperrklappe (22) verschlossen ist.

15. Absperrorgan, welches für eine pneumatische Verteilmaschine, insbesondere Düngerstreuer und/oder Sämaschine, zum Verteilen von pulver- oder partikelförmigen Verteilgütern geeignet ist, mit einem von einem Verteilgutkanal (20) durchsetzten Gehäuse (18) und einer in dem Gehäuse (18) schwenkbar gelagerten Absperrklappe (22), um den Verteilgutkanal (20) bedarfsweise zu verschließen und/oder zu verengen, **dadurch gekennzeichnet, dass** die Absperrklappe (22) an einem ihrer Schwenkachse (A) zugewandten Abschnitt (33)eine höhere Steifigkeit aufweist als an ihrem elastisch nachgiebig ausgestalteten Endabschnitt (34), welcher in der Schließstellung der Absperrklappe (22) gegen zumindest einen ihrer Schwenkachse (A) abgewandten Innenquerschnittsbereich des Verteilgutkanals (20) anliegt, wobei das Absperrorgan ferner insbesondere wenigstens eines der kennzeichnenden Merkmale der Ansprüchen 2 bis 17 aufweist.
